# EUROPEAN PATENT APPLICATION

(11) **EP 4 617 548 A1**
(43) Date of publication of application: **17.09.2025**
(21) Application number: 24162528.4
(22) Date of filing: 11.03.2024
(51) Int. Cl.: F16L 59/02

(54) **INSULATION DEVICE, METHOD OF THERMALLY INSULATING AT LEAST ONE PIPE, AND METHOD OF MANUFACTURING AN INSULATION DEVICE**

(71) Applicant: Armacell Enterprise GmbH & Co. KG, 12529 Schönefeld OT Waltersdorf (DE)
(72) Inventor: GEISS, Daniel, Schönefeld OT Waltersdorf (DE); TROJANOWSKA-TOMCZAK, Monika, Schönefeld OT Waltersdorf (DE); DOLEGA, Justyna, Schönefeld OT Waltersdorf (DE)
(74) Representative: Vossius & Partner Patentanwälte Rechtsanwälte mbB

(57) **Abstract**

The present invention relates to an insulation device (10) configured to thermally insulate a pipe (11), including a main body (12) made of a thermally insulating foam material and configured to be placed over the pipe (11). The main body (12) has a gap (14) between two adjacent sections of the main body (12). The insulation device (10) includes an attachment device (22) including a first attachment component (24) attached to a first section (16) and a second attachment component (26) attached to a second section (18). The first attachment component (24) includes a plurality of first engagement elements (30) and the second attachment component (26) includes a plurality of second engagement elements (32) configured to releasably interlock with the first engagement elements (30) to releasably secure the first attachment component (24) to the second attachment component (26). The first engagement elements (30) are distributed on the first attachment component (24) and the second engagement elements (32) are distributed on the second attachment component (26).

The present invention further relates to a method of thermally insulating a pipe (11) by a insulation device (10) and a method of manufacturing an insulation device (10).

## Description

### Background of the invention

Pipes are employed in a number of different environments and/or for a variety of purposes and/or applications, e.g., to transport different media, such as various types of liquids and/or gases. Pipes may be used in industrial applications, e.g., to transport liquids and/or gases to and/or from an industrial environment, such as a manufacturing environment. Pipes may also be employed in a civil and/or residential environment, e.g., for providing cooling and/or heating, for instance, in an atmosphere within a building. Besides transporting gases and liquids, pipes may also be used to transport solid, or at least partially solid, goods, such as granulates and/or powder.

It is known to at least partially cover the respective pipes with at least one material for various reasons, primarily to thermally insulate the pipes. To install the material, the material may include a gap, e.g., a slit, which may extend along a longitudinal axis of the pipe, in particular through which the pipe may pass as the material is placed over the respective pipe. This allows the material to be placed relatively easily over the pipe, in particular a pre-installed pipe. Once the material is in place, the gap is often at least partially closed/reclosed, e.g., by joining/rejoining adjacent sections of the material along the gap.

There are several mechanisms known from the prior art for closing the above-identified gap in the respective material. In many cases, the gap is closed by depositing an adhesive, e.g., glue, along an interface between adjacent sections of the material along the gap. In particular, solvent-based adhesives are often used for this purpose.

In particular, it is known from the prior art to use an adhesive and/or sealing tape, also known as adhesive tape, to close the gap in the material. In particular, sealing tape, in particular sealing tape which is pre-installed or pre-attached to the respective material by the respective manufacturer, is often used by do-it-yourself (DIY) installers due to the relatively simple installation and handling properties of such sealing tape.

As mentioned above, sealing tape may be pre-attached, i.e., pre-installed, to an interface of adjacent sections of the material, e.g., so-called self-seal tubes, in particular such that a user only has to remove a liner and can directly join said adjacent sections manually by pressing the adjacent sections of the material, on which the sealing tape is attached, together. Alternatively, sealing tapes can be obtained separately and attached to the material prior to installation and/or at the site of installation, e.g., to a top-side of the material, often referred to as a "top-seal tape".

However, sealing tape, in particular sealing tape which is specifically designed for insulation material, and/or material, in particular insulation material, with sealing tape pre-attached thereto is/are relatively expensive.

Cheaper tape, such as duct-tape, is also used, in particular by DIY installers. However, such cheaper tape may have lower thermal insulation properties.

Furthermore, prolonged exposure to oxygen can cause an adhesive, e.g., of the respective tape and/or sealing tape, to fail and allow the gap in the material to unintentionally reopen. Adhesive tapes may also be negatively affected by moisture, dust, and/or one or more further media. Furthermore, adhesives may have a limited and/or a relatively short shelf-life and/or lifetime.

Moreover, adhesives may only allow the respective gap to be closed once, or are at least limited in how often the gap may be closed, opened, and reclosed without reducing the properties and/or performance of the adhesive.

Clamps for closing the above-mentioned gap in the respective material are also known from the prior art. However, such clamps are generally relatively expensive.

Moreover, it is also known from the prior art to use a clip mechanism, e.g., a clip mechanism based on a tongue and groove connection, to close the above-mentioned gap (see, e.g., Climatube^{®} and Nomazip^{®} by NMC sa, Eynatten, Belgium). However, such clip mechanisms generally only allow a relatively loose connection, i.e., such that the gap may not be closed relatively tightly and/or media may pass through the gap and/or the insulating properties of the material with the clip mechanism may be reduced. Moreover, clip mechanisms may require a relatively high installation effort and/or may be prone to installation errors, e.g., since the respective components of the respective clip mechanism attached on opposite sides of the gap generally have to be aligned and connected in order to close the respective clip mechanism.

Hence, the mechanisms known from the prior art for closing one or more gaps in a material have several disadvantages, as discussed above, which have not, or at least not sufficiently, been addressed in the prior art.

It is therefore an object of the present invention to provide an improved means for closing a gap in a material, in particular a gap in a material, in particular an insulation material, which at least partially covers at least one pipe and/or to provide an improved insulation device configured to thermally insulate at least one pipe, in particular by at least partially improving one or more of the above-identified disadvantages.

### Summary of the invention

This object is achieved by an insulation device as defined by the features of claim 1. Variations and further developments are defined by the features of the dependent claims.

The insulation device may include at least one main body which may be at least partially made of a thermally insulating foam material. The main body may be configured to be placed at least partially over the pipe, preferably such that the main body at least partially encompasses an outer circumference of the pipe. The main body may have at least one gap which is arranged between at least two adjacent sections of the main body and which is at least partially closeable, in particular by moving the adjacent sections toward and/or to overlap with each other. The main body may be shaped and/or configured as a tube. The tube may have a ringshaped cross section.

The insulation device may include at least one attachment device. The attachment device may include a first attachment component, which may be attached to a first section of the two adjacent sections. The attachment device may include at least one second attachment component, which may be attached to a second section of the two adjacent sections.

The first attachment component may include a plurality of first engagement elements. The second attachment component may include a plurality of second engagement elements configured to releasably interlock with the first engagement elements to releasably secure the first attachment component to the second attachment component to at least partially close and/or cover the gap. In particular, the plurality of second engagement elements may be configured to releasably interlock with the first engagement elements in a self-gripping manner.

The first engagement elements may be distributed on at least a portion of the first attachment component. The second engagement elements may be distributed on at least a portion of the second attachment component, preferably at least along a longitudinal direction of the main body and/or the pipe, when the main body is placed at least partially over the pipe. The first engagement elements may be spaced from each other, preferably at least along a longitudinal direction of the main body and/or the pipe and/or along a circumferential direction of the main body and/or the pipe, at least when the main body is placed at least partially over the pipe. The second engagement elements may be spaced from each other, preferably at least along a longitudinal direction of the main body and/or the pipe and/or along a circumferential direction of the main body and/or the pipe, at least when the main body is placed at least partially over the pipe.

The insulation device described herein provides several advantages over the known prior art, e.g., the prior art mechanisms mentioned at the beginning. For instance, the first attachment component and second attachment component with the releasably interlockable first engagement elements and second engagement elements may provide more convenient and/or more user-friendly handling properties, in particular during installation, than, e.g., adhesives. Moreover, this may allow the gap to be mechanically/physically closed to a greater extent than with, e.g., clamps.

Furthermore, distributing the first engagement elements and the second engagement elements on at least a portion of the second attachment component, preferably at least along a longitudinal direction of the main body and/or the pipe, may facilitate installation of the insulation device, e.g., by allowing a greater tolerance with respect to an alignment of the first engagement elements and the second engagement elements, e.g., compared with a clip mechanism known from the prior art, e.g., which may require relatively precise alignment of engagement elements, e.g., a tongue and groove. In other words, the first attachment component and second attachment component described herein may not have to be aligned as accurately as the respective components of the respective clip mechanism attached on opposite sides of the gap by providing a plurality of the first engagement elements, a plurality of the second engagement elements, and the above-described distribution of the first engagement elements and second engagement elements.

Moreover, the insulation device may be reused multiple times, i.e., by engaging, disengaging and reengaging the first engagement elements and the second engagement elements multiple times, e.g., to reopen and reclose the gap multiple times.

Furthermore, the insulation device described herein, more specifically closure of the gap in the material by means of the insulation device, may be more robust, e.g., against external and/or environment-based factors, such as humidity, dirt, ambient temperature, etc., e.g., than an adhesive-based device.

Closing the gap, or the gap be "closeable", within the meaning of the present disclosure, means to close the gap by moving the first section and the second section towards each other, i.e., to reduce a distance between the first section and the second section, and/or to at least partially cover the gap, in particular by the attachment device.

The attachment device and/or the first attachment component and/or the second attachment component may be pliable and/or flexible and/or bendable and/or stretchable. This may facilitate handling the attachment device during installation and/or closing the attachment device and/or the gap more tightly.

The first attachment component may be attached to the first section by any means, e.g., by thermally welding the first attachment component to the first section and/or by means of a form-fit connection and/or thermal activation. Alternatively, the first attachment component may be integrally and/or monolithically formed on the first section. For instance, the first attachment component may include at least one layer of a material, e.g., ethylene vinyl acetate (EVA), which is thermally weldable and/or thermally activatable and arranged on a side of the first attachment component which faces the main body, when the insulation device is in an installed state. The layer of material may be heated and/or thermally activated to attach the first attachment component to the first section. Preferably, an attachment of the first attachment component to the first section is free of any adhesive, in particular any solvent-based adhesive, in particular any adhesive which does not require thermal and/or chemical activation to provide adhesive properties, in particular its full adhesive properties.

Alternatively, or additionally, the second attachment component may be attached to the second section by any means, e.g., by thermally welding and/or thermal lamination and/or by means of a form-fit connection. Alternatively, the second attachment component may be integrally and/or monolithically formed on the second section. For instance, the second attachment component may include at least one layer of a material, e.g., ethylene vinyl acetate (EVA), which is thermally weldable and/or thermally activatable and arranged on a side of the second attachment component which faces the main body when the insulation device is in an installed state. The layer of material may be heated and/or thermally activated to attach the second attachment component to the second section. Preferably, an attachment of the second attachment component to the second section is free of any adhesive, in particular any solvent-based adhesive, in particular any adhesive which does not require thermal and/or chemical activation to provide adhesive properties, in particular its full adhesive properties.

The gap may have any shape and/or any size. Preferably, the gap is slit-shaped. In particular, the gap may extend along a longitudinal axis of the insulation device and/or along a longitudinal axis of the main body and/or along a longitudinal axis the pipe, in particular when the main body is placed at least partially over the pipe. Alternatively, or additionally, the gap and/or at least one further gap defined in the main body may extend substantially perpendicularly to a longitudinal axis of the insulation device and/or substantially perpendicularly to a longitudinal axis of the main body and/or substantially perpendicularly to a longitudinal axis the pipe and/or circumferentially, in particular with respect to a circumference of the insulation device and/or the main body and/or the pipe, and/or radially, in particular when the main body is placed at least partially over the pipe.

The gap may be closeable by urging and/or moving the adjacent sections towards each other into a closed position, e.g., manually by a user and/or by a respective apparatus for aiding installation of the insulation device. The attachment device may be configured to at least partially maintain the adjacent sections in the closed position.

The attachment device may be configured to bridge the gap at least along a section of the main body. This may allow the attachment device to at least partially cover the gap, e.g., to prevent media from entering the gap, or at least to reduce an amount of media which may enter the gap.

The first attachment component may include a main structure, e.g., a carrier structure or layer, on which the first engagement elements may be attached and/or from which the first engagement elements may extend. The main structure and the first engagement elements may be made of and/or include the same material. For instance, the entire first attachment component and/or the entire attachment device, including the first engagement elements, may be made of low-density polyethylene (LDPE), in particular when the first engagement elements and the second engagement elements are configured as interlocking harpoons. Alternatively, the main structure and the first engagement elements may be made of different materials. This may allow the main structure and the first engagement elements to be tailored more precisely to the respective desired and/or required properties. For instance, the main structure may be configured to be pliable and/or flexible, preferably to a relatively large extent, and the first engagement elements may be configured to be more rigid and have a greater hardness, e.g., then the main structure, e.g., to increase a resistance and/or a lifetime of the engagement elements, in particular for multiple engagement processes, i.e., engaging, disengaging, and (re)engaging, of the engagement elements. The main structure may be made of a plastic, e.g., a polyamide, and the first engagement elements may be made of, e.g., fibers and/or a fibrous material, in particular when the first engagement elements and the second engagement elements are configured as hooks and loops, respectively.

Alternatively, or additionally, the second attachment component may include a main structure, e.g., a carrier structure or layer, on which the second engagement elements may be attached and/or from which the second engagement elements may extend. The main structure and the second engagement elements may be made of and/or include the same material. Alternatively, the main structure and the second engagement elements may be made of different materials. The same properties and features, as detailed above with respect to the first attachment component, may also apply to the second attachment component.

Preferably, at least some of the first engagement elements are made of plastic, preferably polyamide, and/or at least some of the first engagement elements are made of metal, preferably stainless steel, and/or at least some of the first engagement elements are made of a fiber-reinforced plastic, preferably including a plurality of aramid fibers. Alternatively, or additionally, at least some of the second engagement elements are made of plastic, preferably polyamide, and/or at least some of the second engagement elements are made of metal, preferably stainless steel, and/or at least some of the second engagement elements are made of a fiber-reinforced plastic, preferably including a plurality of aramid fibers.

The main body may include at least one hollow space configured to at least partially receive the pipe, e.g. a lumen (such as a central lumen) extending through the main body along the longitudinal direction of the main body. The main body may be placed and/or slid over the pipe via the gap. For instance, the user may place and/or slide the main body over the pipe, which may be in pre-installed in its operative position.

The engagement of the engagement elements may allow the attachment device and the gap to remain at least partially, preferably completely, in a closed state.

The term "self-gripping" means, within the context of the present disclosure, to interlock merely by contacting the first engagement elements with the second engagement elements, i.e., without needing to apply further forces substantially beyond a force required to contact the first engagement elements with the second engagement elements, e.g., as opposed to a snap-fit, a clip or a zip-lock. In other words, the first engagement element and the second engagement element may be engaged with no, or only minimal, force and/or pressure between the first engagement element with the second engagement element. For instance, it may be sufficient to apply a force less than 50 N, preferably less than 45 N, more preferably less than 40 N, more preferably less than 35 N, more preferably less than 30 N, more preferably less than 25 N, more preferably less than 20 N, preferably less than 15 N, preferably less than 10 N, to engage the first engagement elements with the second engagement elements.

The first attachment component and the second attachment component may at least partially overlap, in an engaged state, along at least a section of the first attachment component and/or the second attachment component on which the first engagement elements and/or the second engagement elements are arranged and/or along at least a section of the first attachment component and/or the second attachment component which is/are free of the first engagement elements and/or the second engagement elements.

The attachment device may be configured such that the first engagement elements and the second engagement elements may be engaged, disengaged, and (re)engaged multiple times, in particular without reducing the performance of the first engagement elements and the second engagement elements, in particular with respect to engaging with each other and maintaining an engaged state.

The attachment device may be made at least partially of a thermoplastic, in particular low density polyethylene (LDPE), high density polyethylene (HDPE) and/or ethylene-vinyl acetate (EVA).

The present disclosure shall not be limited to a certain number of the first engagement elements and/or the second engagement elements. For instance, the first attachment component may include at least 10 first engagement elements, preferably at least 20 first engagement elements, more preferably at least 30 first engagement elements, more preferably at least 40 first engagement elements, more preferably at least 50 first engagement elements, more preferably at least 60 first engagement elements, more preferably at least 70 first engagement elements, more preferably at least 80 first engagement elements, more preferably at least 90 first engagement elements, more preferably at least 100 first engagement elements, more preferably at least 250 first engagement elements, more preferably at least 500 first engagement elements, more preferably at least 750 first engagement elements, more preferably at least 1000 first engagement elements. Alternatively, or additionally, the second attachment component may include at least 10 second engagement elements, preferably at least 20 second engagement elements, more preferably at least 30 second engagement elements, more preferably at least 40 second engagement elements, more preferably at least 50 second engagement elements, more preferably at least 60 second engagement elements, more preferably at least 70 second engagement elements, more preferably at least 80 second engagement elements, more preferably at least 90 second engagement elements, more preferably at least 100 second engagement elements, more preferably at least 250 second engagement elements, more preferably at least 500 second engagement elements, more preferably at least 750 second engagement elements, more preferably at least 1000 second engagement elements. A greater number of engagement elements may provide a higher strength of connection between the first attachment component and the second attachment component. Moreover, a greater number of engagement elements may provide a greater tolerance for aligning the first attachment component and the second attachment component. In other words, the accuracy with which the first attachment component and the second attachment component have to or should be aligned may be reduced for a greater number of engagement elements. This may (further) facilitate installation and/or user-friendliness of the insulation device.

Preferably, the first engagement elements are distributed on at least a portion of the first attachment component along a circumferential direction of the pipe and/or the main body and the second engagement elements are distributed on at least a portion of the second attachment component along a circumferential direction of the pipe and/or the main body, in a state in which the insulation device and/or the main body is placed at least partially over the pipe. This may provide multiple first engagement elements and multiple second engagement elements along a circumferential direction of the pipe and/or the main body which may increase a degree of fixation between the first attachment component and the second attachment component. Moreover, this may facilitate engaging the first attachment component and the second attachment component, e.g., during installation, compared with providing only one first engagement element and only one second engagement element along a circumferential direction of the pipe and/or the main body which would require a relatively precise alignment of the first engagement element and the engagement element, as discussed at the beginning with respect to a clip mechanism known from the prior art.

Preferably, the first engagement elements and/or the second engagement elements are arranged in multiple rows along a circumferential direction of the pipe and/or the main body and/or in multiple rows along a longitudinal direction of the main body and/or the pipe, at least when the main body is placed at least partially over the pipe.

Preferably, at least one portion of the first attachment component is free of the first engagement elements. This may allow the portion of the first attachment component which is free of the first engagement elements to at least partially serve as an attachment mechanism, e.g., to attach the first attachment component to the main body of the insulation device. This may prevent the first engagement elements from being compromised and/or altered, or at least reduce the risk thereof, by an attachment and/or an attachment process, e.g., thermal activation and/or welding and/or thermal lamination, for attaching the first attachment component to the main body. Preferably, all sides of the respective portion of the first attachment component are free of the first engagement elements. Preferably, the portion of the first attachment component which is free of the first engagement elements extends in the longitudinal direction of the pipe. Preferably, the portion of the first attachment component which is free of the first engagement elements is attached to an outer peripheral surface of the main body. Preferably, the first attachment component is attached to the first section of the main body by means of the portion of the first attachment component which is free of the first engagement elements, preferably only by means of the portion of the first attachment component which is free of the first engagement elements.

Alternatively, or additionally, at least one portion of the second attachment component is free of the second engagement elements. Preferably, the portion of the second attachment component which is free of the second engagement elements extends in the longitudinal direction of the pipe. Preferably, the portion of the second attachment component which is free of the second engagement elements faces away from the gap, when the insulation device is mounted to the pipe. Preferably, the second attachment component is attached to the second section of the main body by means of the portion of the second attachment component which is free of the second engagement elements, preferably only by means of the portion of the second attachment component which is free of the second engagement elements. The same features and advantages, as described above with respect to at least one portion of the first attachment component preferably being free of the first engagement elements, apply to the second attachment component.

The portion(s) of the respective attachment component which is/are free of engagement elements may be configured as a flange or flanges, e.g., for attaching the respective attachment component to the main body.

As mentioned above, preferably all sides of the respective portion of the respective attachment component are free of the respective engagement elements. Alternatively, only one side of the respective portion of the respective attachment component may be free of the respective engagement elements. For instance, a back side of the respective portion of the respective attachment component, i.e., a side which faces away from the main body, when the insulation is in an installed state, may be free of the respective engagement elements and a front side of the respective portion of the respective attachment component, i.e., a side which faces the main body, when the insulation is in an installed state, may include the respective engagement elements, or vice versa.

Preferably, the first attachment component includes two portions which are free of the first engagement elements. The first engagement elements may be arranged on at least a section of the first attachment component which is arranged between and/or which interconnects the two portions which are free of the first engagement elements. Alternatively, or additionally, the second attachment component may include two portions which are free of the second engagement elements. The second engagement elements may be arranged on at least a section of the second attachment component which is arranged between and/or which interconnects the two portions which are free of the second engagement elements.

Preferably, the foam is an open-cell foam or a closed-cell foam, preferably polyurethane foam or preferably polyethylene foam.

Preferably, the first attachment component and/or the second attachment component is/are attached on an outer circumference and/or an outer peripheral surface of the main body. This may allow and/or facilitate the first attachment component and/or the second attachment component to span and/or bridge and/or cover the gap, at least along a section of the gap which extends along the longitudinal axis of the main body and/or the pipe.

Preferably, the first attachment component is attached to a surface of the first section of the main body which faces the second section of the main body and/or at least partially delimits the gap. Alternatively, or additionally, the second attachment component is attached to a surface of the second section of the main body which faces the first section of the main body and/or at least partially delimits the gap. In other words, the first engagement elements and the second engagement elements may be arranged at least partially within the gap. This may further simplify the installation process of the attachment device, e.g., by simply pressing the first section and the second section of the main body together to engage the first engagement elements and the second engagement elements.

Preferably, the first engagement elements or the second engagement elements are configured as loops and the other of the first engagement elements and the second engagement elements are configured as hooks configured to interlock with the loops.

Preferably, the first engagement elements and/or the second engagement elements are configured as harpoon-like elements or mushroom-like elements configured to interlock with the other of the first engagement elements and the second engagement elements.

Preferably, the first engagement elements have substantially the same configuration as the second engagement elements. For instance, the first engagement elements and the second engagement elements may be substantially the same type of engagement elements, may have the same shape, may have one or more of the same dimensions, etc., taking variations/tolerances during manufacturing into account.

Alternatively, the first engagement elements have a different configuration compared with the second engagement elements, e.g., the first engagement elements may be configured as hooks and the second engagement elements may be configured as loops or vice versa.

All of the first engagement elements may have substantially the same configuration. Alternatively, the first engagement elements may have different configuration amongst themselves. For instance, some of the first engagement elements may be configured as hooks and some of the first engagement elements may be configured as loops. Alternatively, or additionally, the same may apply to the second engagement elements.

Preferably, the first attachment component is bonded, preferably welded, preferably thermally welded and/or thermally laminated and/or thermally activated, to the first section of the main body. Alternatively, or additionally, the second attachment component is bonded, preferably welded, preferably thermally welded and/or thermally laminated and/or thermally activated, to the second section of the main body. An adhesive bond, e.g., by means of a pressure sensitive adhesive, between the first attachment component and the main body and/or between the second attachment component and the main body may also be feasible, although such a connection may be more prone to deterioration and/or failure, e.g., compared with a thermally welded and/or thermally activated connection.

Preferably, the outer circumference of the main body is substantially free of the attachment device and/or the attachment device is not externally visible, when the attachment device is attached to the main body. This may provide a more aesthetically appealing appearance of the insulation device, i.e., such that the attachment is not or only minimally visible, when the insulation device has been installed. For instance, the attachment device may be covered by at least one cover and/or the attachment device may be arranged, preferably completely, within the gap and/or between the main body and the pipe.

Preferably, the first attachment component and/or the main body is/are configured to allow the first attachment component to be bonded to the first section of the main body (by thermal welding and/or thermal activation of a bonding layer) by applying heat to the first attachment component and/or the main body at a temperature which is sufficient to at least partially melt the first attachment component and/or the main body, in particular under the given process conditions, e.g., depending on the line-speed, choice of materials, etc., to bond the first attachment component to the first section of the main body, preferably without deforming, in particular plastically deforming, and/or compromising the first engagement elements, or at least by reducing the risk thereof. For instance, the heat may be applied to the first attachment component and/or the main body at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, more preferably no more than 130° C, more preferably no more than 120° C, more preferably no more than 110° C, more preferably no more than 100° C, more preferably no more than 90° C, more preferably no more than 85° C. Alternatively, or additionally, the same may be apply to the second attachment component. For instance, the second attachment component and/or the main body may be configured to allow the second attachment component to be bonded to the second section of the main body (by thermal welding and/or thermal activation of a bonding layer) by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C, more preferably no more than 85° C.

Preferably, the main body may be made of and/or include one or more of the following: polyolefin plastomers, POP, one or more polyolefin elastomers, PEP, LDPE, metallocene LDPE, LLDPE, metallocene LLDPE, MDPE, HDPE, polar ethylene-copolymers like alkylacrylates or alkylacetates, and thermoplastic elastomers. Configuring the main body to include 1-octene-ethylene co-polymers may provide an increased adhesion between the of main body and the respective attachment component of the attachment device and/or may provide an increased tensile strength and/or and increased elongation at break of the main body and/or may increase low-temperature tack to other polyolefinic polymers, such as LDPE and/or HDPE.

Preferably, the one or more polyolefin plastomers and/or the one or more polyolefin elastomers account for 10 % by mass to 60 % by mass, preferably 10 % by mass to 50 % by mass, more preferably 10 % by mass to 45 % by mass, more preferably 15 % by mass to 45 % by mass, more preferably 15 % by mass to 40 % by mass, more preferably 20 % by mass to 40 % by mass, of a total mass of the thermally insulating foam material.

Preferably, the one or more polyolefin plastomers and/or the one or more polyolefin elastomers account for at least 10 % by mass, preferably at least 15 % by mass, more preferably at least 20 % by mass, more preferably at least 25 % by mass, more preferably at least 30 % by mass, more preferably at least 35 % by mass, more preferably at least 40 % by mass, more preferably at least 45 % by mass, more preferably at least 50 % by mass, more preferably at least 55 % by mass, more preferably at least 60 % by mass, more preferably at least 65 % by mass, more preferably at least 70 % by mass, of a total mass of the thermally insulating foam material.

Preferably, the insulation device includes at least one cover layer which at least partially, preferably completely, covers or is configured to at least partially, preferably completely, cover a side of the attachment device, which faces away from the main body, and/or at least a section of the main body. The cover layer may be non-combustible. The cover layer may provide additional and/or increased mechanical stability to the attachment device and/or the main body and/or may increase the safety of the insulation device, e.g., with respect to a potential fire, and/or may provide an enhanced aesthetic appeal of the attachment device and/or the main body, e.g., by including one or more aesthetically appealing design elements and/or by covering one or more structures of the attachment device and/or main body which may not be considered to be aesthetically appealing.

Preferably, the cover layer is made of or includes one or more of the following: metal, preferably aluminum, preferably an aluminum foil, pulp, fabric, mesh, cloth, one or more natural fibers, one or more synthetic fibers, a composite material, preferably a fiber composite material which includes one or more fibers which are connected to and/or embedded in at least one matrix material, which preferably includes polyethylene terephthalate, PET, preferably also including one or more flame retardants, preferably one or more halogenated flame retardants.

Preferably, the cover layer is, or is configured to be, fixedly attached, preferably thermally welded and/or without adhesives and/or by thermal activation, to at least a section of the attachment device and/or to at least a section of the main body. For instance, the cover layer may include at least one layer of a material, e.g., ethylene vinyl acetate (EVA), which is thermally weldable and/or thermally activatable, e.g., by hot air, and arranged on a side of the cover layer which faces the main body, when the insulation device is in an installed state. The layer of material may be heated and/or thermally activated to fixedly attach the cover layer to the attachment device and/or the main body.

Preferably, the cover layer is configured to release one or more flame retardants, preferably one or more halogenated flame retardants, preferably upon contact with a flame and/or heat.

Preferably, the cover layer is configured to at least partially carbonize to trigger a release of at least a portion of the one or more flame retardants.

Preferably, the insulation device is configured meet the requirements of the fire rating of Euroclass E, in particular according to DIN EN ISO 11925-2.

Preferably, the main body is free of flame retardant agents.

As noted above, the insulation device may be configured to thermally insulate at least one pipe. Alternatively, or additionally, the insulation device may be configured to thermally insulate a variety of other/different objects. Thus, although the present disclosure may generally describe the insulation device with respect to a pipe, the insulation device may be applicable to an object in general, e.g., to a variety of other and/or different objects.

The object mentioned at the beginning is also achieved by a method of thermally insulating at least one pipe by at least one insulation device.

The features, embodiments, and advantages, as detailed herein with respect to the insulation device, apply to the method accordingly.

The method preferably is performed by means of and/or with the aid of the insulation device described herein, e.g., as described above.

The steps of the method described herein are not limited to a particular sequence and may be performed in any technically feasible sequence.

The method preferably includes: placing a main body of the insulation device at least partially over the pipe such that the main body at least partially encompasses an outer circumference of the pipe. The main body may be at least partially made of a thermally insulating foam material. The main body may have at least one gap which is arranged between at least two adjacent sections of the main body and which is at least partially closeable.

The method preferably includes: engaging a plurality of first engagement elements of a first attachment component, which is attached to a first section of the two adjacent sections, with a plurality of second engagement elements of a second attachment component, which is attached to a second section of the two adjacent sections, to allow the second engagement elements to releasably interlock with the first engagement elements, preferably in a self-gripping manner, to releasably secure the first attachment component to the second attachment component to at least partially close and/or cover the gap. The first engagement elements may be distributed on at least a portion of the first attachment component. The second engagement elements may be distributed on at least a portion of the second attachment component, preferably at least along a longitudinal direction of the main body and/or the pipe, in particular when the main body is placed at least partially over the pipe.

The object mentioned at the beginning is also achieved by a method of manufacturing an insulation device, preferably the insulation device according to any of the embodiments described herein, configured to thermally insulate at least one pipe.

The features, embodiments, and advantages, as detailed herein with respect to the insulation device, apply to the method of manufacturing an insulation device accordingly.

The method preferably includes: providing at least one main body which is at least partially made of a thermally insulating foam material and is configured to be placed at least partially over the pipe such that the main body at least partially encompasses an outer circumference of the pipe. The main body may have at least one gap which is arranged between at least two adjacent sections of the main body and which is at least partially closeable.

The method may include: providing at least one attachment device which includes a first attachment component and at least one second attachment component. The first attachment component may include a plurality of first engagement elements and the second attachment component includes a plurality of second engagement elements configured to releasably interlock with the first engagement elements, preferably in a self-gripping manner, to releasably secure the first attachment component to the second attachment component to at least partially close and/or cover the gap. The first engagement elements may be distributed on at least a portion of the first attachment component and the second engagement elements are distributed on at least a portion of the second attachment component, at least along a longitudinal direction of the main body and/or the pipe, when the main body is placed at least partially over the pipe.

The method may include: attaching the first attachment component to a first section of the two adjacent sections and the second attachment component to a second section of the two adjacent sections.

Preferably, the first attachment component is bonded, preferably by thermal activation or welded, preferably thermally welded, to the first section of the main body. Alternatively, or additionally, the second attachment component may be bonded, preferably by thermal activation or welded, preferably thermally welded, to the second section of the main body.

Preferably, the first attachment component is bonded to the first section of the main body (by thermal welding and/or thermal activation of a bonding layer, such as an EVA layer) by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C, more preferably no more than 85° C. Alternatively, or additionally, the second attachment component may be bonded to the second section of the main body (by thermal welding and/orthermal activation of a bonding layer, such as an EVA layer) by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C, more preferably no more than 85° C.

Preferably, the heat is applied by one or more of the following: a hot air device configured to emit heated air, a radiation device configured to emit infrared radiation, and a hot plate device having at least one heated surface.

Preferably, the first attachment component is attached to the first section by means of at least one portion of the first attachment component which is free of the first engagement elements, preferably only by means of the portion of the first attachment component which is free of the first engagement elements. Alternatively, or additionally, the second attachment component may be attached to the second section by means of at least one portion of the second attachment component which is free of the second engagement elements, preferably only by means of the portion of the second attachment component which is free of the second engagement elements.

The following list of aspects provides preferred embodiments of the present disclosure:
1. A device, which is preferably configured to thermally insulate at least one object, preferably at least one pipe, the device including:
   at least one main body which is preferably at least partially made of a thermally insulating material, preferably a thermally insulating foam material, and is configured to be placed at least partially over the pipe such that the main body at least partially encompasses an outer circumference of the pipe, wherein the main body has at least one gap which is arranged between at least two adjacent sections of the main body and which is at least partially closeable; and
   at least one attachment device which includes a first attachment component, which is attached to a first section of the two adjacent sections, and at least one second attachment component, which is attached to a second section of the two adjacent sections,
   wherein the first attachment component includes a plurality of first engagement elements and the second attachment component includes a plurality of second engagement elements configured to releasably interlock with the first engagement elements, preferably in a self-gripping manner, to releasably secure the first attachment component to the second attachment component to at least partially close and/or cover the gap;
   preferably wherein the first engagement elements are distributed on at least a portion of the first attachment component and/or the second engagement elements are distributed on at least a portion of the second attachment component, preferably at least along a longitudinal direction of the main body and/or the pipe, when the main body is placed at least partially over the pipe.
2. The insulation device according to aspect 1, wherein the first engagement elements are distributed on at least a portion of the first attachment component along a circumferential direction of the pipe and/or the main body and the second engagement elements are distributed on at least a portion of the second attachment component along a circumferential direction of the pipe and/or the main body, in a state in which the insulation device and/or the main body is placed at least partially over the pipe.
3. The insulation device according to aspect 1 or 2, wherein:
   at least one portion of the first attachment component is free of the first engagement elements, preferably wherein the portion of the first attachment component which is free of the first engagement elements extends in the longitudinal direction of the pipe, preferably wherein the portion of the first attachment component which is free of the second engagement elements is attached to an outer peripheral surface of the main body, when the insulation device is mounted to the pipe, preferably wherein the first attachment component is attached to the first section of the main body by means of the portion of the first attachment component which is free of the first engagement elements, preferably only by means of the portion of the first attachment component which is free of the first engagement elements;
      and/or
   at least one portion of the second attachment component is free of the second engagement elements, preferably wherein the portion of the second attachment component which is free of the second engagement elements extends in the longitudinal direction of the pipe, preferably wherein the portion of the second attachment component which is free of the second engagement elements faces away from the gap, when the insulation device is mounted to the pipe, preferably wherein the second attachment component is attached to the second section of the main body by means of the portion of the second attachment component which is free of the second engagement elements, preferably only by means of the portion of the second attachment component which is free of the second engagement elements.
4. The insulation device according to any of the preceding aspects, wherein:
   the first attachment component includes two portions which are free of the first engagement elements, wherein the first engagement elements are arranged on at least a section of the first attachment component which is arranged between and/or which interconnects the two portions which are free of the first engagement elements; and/or
   the second attachment component includes two portions which are free of the second engagement elements, wherein the second engagement elements are arranged on at least a section of the second attachment component which is arranged between and/or which interconnects the two portions which are free of the second engagement elements.
5. The insulation device according to any of the preceding aspects, wherein the foam is an open-cell foam or a closed-cell foam, preferably polyurethane foam or preferably polyethylene foam.
6. The insulation device according to any of the preceding aspects, wherein the first attachment component and/or the second attachment component is/are attached on an outer circumference of the main body.
7. The insulation device according to any of the preceding aspects, wherein:
   the first attachment component is attached to a surface of the first section of the main body which faces the second section of the main body and/or at least partially delimits the gap;
      and/or
   the second attachment component is attached to a surface of the second section of the main body which faces the first section of the main body and/or at least partially delimits the gap.
8. The insulation device according to any of the preceding aspects, wherein the first engagement elements or the second engagement elements are configured as loops and the other of the first engagement elements and the second engagement elements are configured as hooks configured to interlock with the loops.
9. The insulation device according to any of the preceding aspects, wherein the first engagement elements and/or the second engagement elements are configured as harpoon-like elements or mushroom-like elements configured to interlock with the other of the first engagement elements and the second engagement elements.
10. The insulation device according to any of the preceding aspects, wherein the first engagement elements have substantially the same configuration as the second engagement elements.
11. The insulation device according to any of the preceding aspects, wherein:
   the first attachment component is bonded, preferably welded, preferably thermally welded, to the first section of the main body;
      and/or
   the second attachment component is bonded, preferably welded, preferably thermally welded, to the second section of the main body.
12. The insulation device according to any of the preceding aspects, wherein:
   at least some of the first engagement elements are made of plastic, preferably polyamide, and/or at least some of the first engagement elements are made of metal, preferably stainless steel, and/or at least some of the first engagement elements are made of a fiber-reinforced plastic, preferably including a plurality of aramid fibers;
      and/or
   at least some of the second engagement elements are made of plastic, preferably polyamide, and/or at least some of the second engagement elements are made of metal, preferably stainless steel, and/or at least some of the second engagement elements are made of a fiber-reinforced plastic, preferably including a plurality of aramid fibers.
13. The insulation device according to any of the preceding aspects, wherein the outer circumference of the main body is substantially free of the attachment device, when the attachment device is attached to the main body.
14. The insulation device according to any of the preceding aspects, wherein:
   the first attachment component and/or the main body is/are configured to allow the first attachment component to be thermally welded to the first section of the main body by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C; more preferably no more than 85° C;
      and/or
   the second attachment component and/or the main body is/are configured to allow the second attachment component to be thermally welded to the second section of the main body by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C; more preferably no more than 85° C.
15. The insulation device according to any of the preceding aspects, wherein the thermally insulating foam material includes one or more polyolefin plastomers, POP, and/or one or more polyolefin elastomers, PEP.
16. The insulation device according to aspect 15, wherein the one or more polyolefin plastomers and/or the one or more polyolefin elastomers account for 10 % by mass to 60 % by mass, preferably 10 % by mass to 50 % by mass, more preferably 10 % by mass to 45 % by mass, more preferably 15 % by mass to 45 % by mass, more preferably 15 % by mass to 40 % by mass, more preferably 20 % by mass to 40 % by mass, of a total mass of the thermally insulating foam material.
17. The insulation device according to aspect 15, wherein the one or more polyolefin plastomers and/or the one or more polyolefin elastomers account for at least 10 % by mass, preferably at least 15 % by mass, more preferably at least 20 % by mass, more preferably at least 25 % by mass, more preferably at least 30 % by mass, more preferably at least 35 % by mass, more preferably at least 40 % by mass, more preferably at least 45 % by mass, more preferably at least 50 % by mass, more preferably at least 55 % by mass, more preferably at least 60 % by mass, more preferably at least 65 % by mass, more preferably at least 70% by mass, of a total mass of the thermally insulating foam material.
18. The insulation device according to any of the preceding aspects, further including at least one cover layer which at least partially, preferably completely, covers or is configured to at least partially, preferably completely, cover a side of the attachment device which faces away from the main body, preferably wherein the cover layer is non-combustible.
19. The insulation device according to aspect 18, wherein the cover layer is made of or includes one or more of the following: metal, preferably aluminum, preferably an aluminum foil, pulp, fabric, mesh, cloth, one or more natural fibers, one or more synthetic fibers, a composite material, preferably a fiber composite material which includes one or more fibers which are connected to and/or embedded in at least one matrix material, which preferably includes polyethylene terephthalate, PET, preferably also including one or more flame retardants, preferably one or more halogenated flame retardants.
20. The insulation device according to aspect 18 or 19, wherein the cover layer is, or is configured to be, fixedly attached, preferably thermally welded and/or without adhesives and/or by thermal activation, to at least a section of the attachment device.
21. The insulation device according to any of aspects 18 to 20, wherein the cover layer is configured to release one or more flame retardants, preferably upon contact with a flame and/or heat.
22. The insulation device according to aspect 21, wherein the cover layer is configured to at least partially carbonize to trigger a release of at least a portion of the one or more flame retardants.
23. The insulation device accordingto any of the preceding aspects, wherein the insulation device is configured meet the requirements of the fire rating of Euroclass E.
24. The insulation device according to any of the preceding aspects, wherein the main body is free of flame retardant agents.
25. A method of thermally insulating at least one object, preferably at least one pipe, by at least one insulation device, preferably by at least one insulation device according to any of the preceding aspects, including:
   placing a main body of the insulation device at least partially over the pipe such that the main body at least partially encompasses an outer circumference of the pipe, wherein the main body is at least partially made of a thermally insulating material, preferably a thermally insulating foam material, and wherein the main body has at least one gap which is arranged between at least two adjacent sections of the main body and which is preferably at least partially closeable;
   engaging a plurality of first engagement elements of a first attachment component, which is attached to a first section of the two adjacent sections, with a plurality of second engagement elements of a second attachment component, which is attached to a second section of the two adjacent sections, to allow the second engagement elements to releasably interlock with the first engagement elements, preferably in a self-gripping manner, to releasably secure the first attachment component to the second attachment component to at least partially close and/or cover the gap, preferably wherein the first engagement elements are distributed on at least a portion of the first attachment component and/or the second engagement elements are distributed on at least a portion of the second attachment component, preferably at least along a longitudinal direction of the main body and/or the pipe, when the main body is placed at least partially over the pipe.
26. A method of manufacturing an insulation device, preferably the insulation device according to any of aspects 1 to 24, configured to thermally insulate at least one object, preferably at least one pipe, the method including:
   providing at least one main body which is at least partially made of a thermally insulating material, preferably a thermally insulating foam material, and is configured to be placed at least partially over the pipe such that the main body at least partially encompasses an outer circumference of the pipe, wherein the main body has at least one gap which is arranged between at least two adjacent sections of the main body and which is preferably at least partially closeable; and
   providing at least one attachment device which includes a first attachment component and at least one second attachment component, wherein the first attachment component includes a plurality of first engagement elements and the second attachment component includes a plurality of second engagement elements configured to releasably interlock with the first engagement elements, preferably in a self-gripping manner, to releasably secure the first attachment component to the second attachment component to at least partially close and/or cover the gap, preferably wherein the first engagement elements are distributed on at least a portion of the first attachment component and/or the second engagement elements are distributed on at least a portion of the second attachment component, preferably at least along a longitudinal direction of the main body and/or the pipe, when the main body is placed at least partially over the pipe.
   attaching the first attachment component to a first section of the two adjacent sections and the second attachment component to a second section of the two adjacent sections.
27. The method according to aspect 26, wherein:
   the first attachment component is bonded, preferably welded, preferably thermally welded, to the first section of the main body;
      and/or
   the second attachment component is bonded, preferably welded, preferably thermally welded, to the second section of the main body.
28. The method according to aspect 26 or 27, wherein
   the first attachment component is thermally welded to the first section of the main body by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C; more preferably no more than 85° C;
      and/or
   the second attachment component is thermally welded to the second section of the main body by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C; more preferably no more than 85° C.
29. The method according to aspect 28, wherein the heat is applied by one or more of the following: a hot air device configured to emit heated air, a radiation device configured to emit infrared radiation, and a hot plate device having at least one heated surface.
30. The method according to any of aspects 26 to 29, wherein:
   the first attachment component is attached to the first section by means of at least one portion of the first attachment component which is free of the first engagement elements, preferably only by means of the portion of the first attachment component which is free of the first engagement elements;
      and/or
   the second attachment component is attached to the second section by means of at least one portion of the second attachment component which is free of the second engagement elements, preferably only by means of the portion of the second attachment component which is free of the second engagement elements.

Preferred embodiments of the present invention are further elucidated below with reference to the figures. The described embodiments are merely exemplary and do not limit the present invention, as defined by the claims and their respective equivalents.
- Fig. 1: shows, in a schematic front view, an insulation device according to an embodiment of the present disclosure before installation;
- Fig. 2: shows, in a schematic front view, the insulation device of Fig. 1 after installation;
- Fig. 3: shows, in a schematic front view, an insulation device according to a further embodiment of the present disclosure before installation;
- Fig. 4: shows, in a schematic front view, the insulation device of Fig. 3 after installation;
- Fig. 5: shows, in a schematic side view, an insulation device according to a further embodiment of the present disclosure;
- Fig. 6: shows, in a schematic front view, the insulation device of Fig. 5.

### Detailed description of the drawings

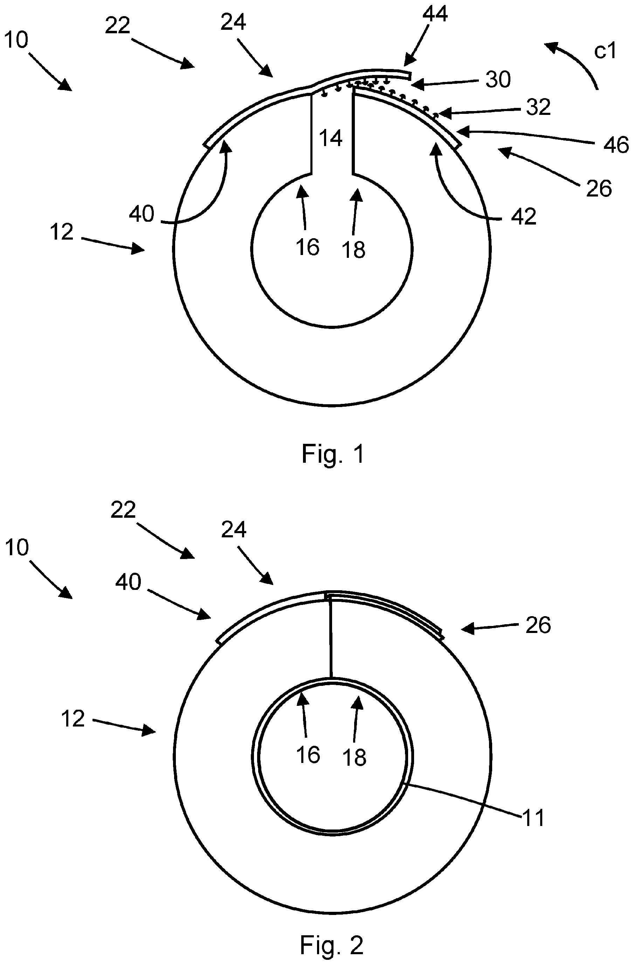

Figs. 1 and 2 show, in schematic and perspective illustrations, an insulation device 10 which may be configured to thermally insulate at least one pipe 11 according to an embodiment of the present disclosure. Fig. 1 shows the insulation device 10 in a state before installation, whereas Fig. 2 shows the insulation device 10 in an installed state, i.e., in which the insulation device 10 is placed over the pipe 11.

The insulation device 10 may include at least one main body 12 which may be at least partially made of a thermally insulating foam material and may be configured to be placed at least partially over the pipe 11, in particular such that the main body 12 at least partially encompasses an outer circumference of the pipe. 11. The thermally insulating foam material may be an open-cell foam or a closed-cell foam, preferably polyurethane foam or preferably polyethylene foam. The thermally insulating foam material may include one or more polyolefin plastomers, POP, and/or one or more polyolefin elastomers, PEP.

The main body 12 may have at least one gap 14 which may be arranged between at least two adjacent sections 16, 18 of the main body 12 and which is at least partially closeable.

The insulation device 10 may include at least one attachment device 22 which may include a first attachment component 24 which may be attached to a first section 16 of the two adjacent sections 16, 18. The attachment device 22 may include at least one second attachment component 26 which may be attached to a second section 18 of the two adjacent sections 16, 18.

The first attachment component 24 and/or the second attachment component 26 may be attached on an outer circumference and/or an outer and/or outward facing, in particular radially outward facing, surface of the main body 12.

The first attachment component 24 may be bonded, preferably welded, preferably thermally welded, and/or thermally laminated and/or thermally activated, to the first section 16 of the main body 12. Alternatively, or additionally, the second attachment component 26 may be bonded, preferably welded, preferably thermally welded, and/or thermally laminated and/or thermally activated, to the second section 18 of the main body 12.

The first attachment component 24 may include a plurality of first engagement elements 30 and the second attachment component 26 may include a plurality of second engagement elements 32 configured to releasably interlock with the first engagement elements 30, preferably in a self-gripping manner, to releasably secure the first attachment component 24 to the second attachment component 26 to at least partially close and/or cover the gap 14.

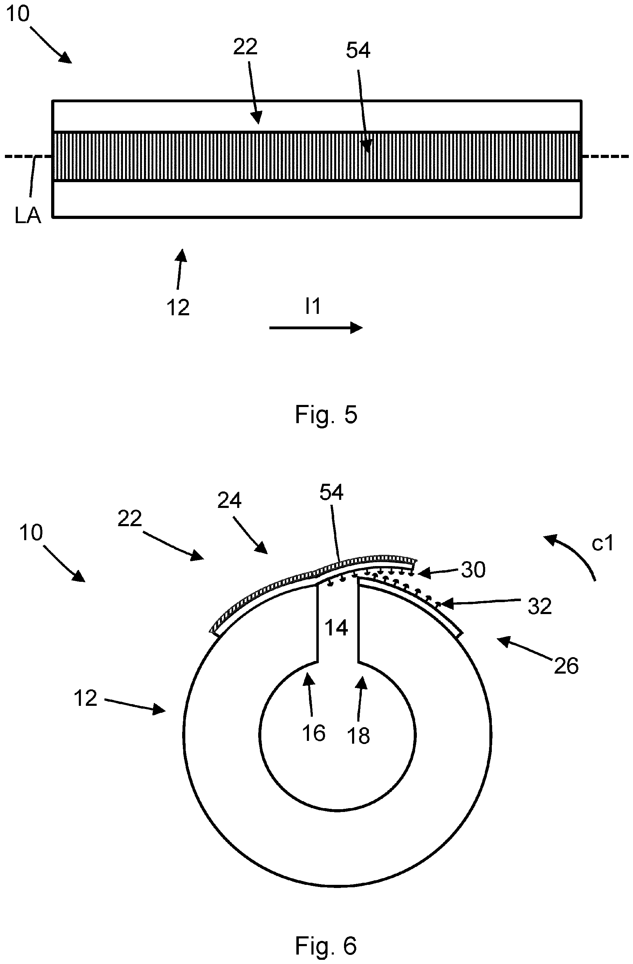

The first engagement elements 30 may be distributed on at least a portion of the first attachment component 24 and the second engagement elements 32 may be distributed on at least a portion of the second attachment component 26, preferably substantially along a longitudinal direction and/or a longitudinal axis and/or a circumferential direction c1 of the main body 12 and/or the pipe 11, when the main body 12 is placed at least partially over the pipe 11. The longitudinal direction of the main body 12 and the pipe 11 extends into the drawing plane, based on the viewing direction in Fig. 1. Hence, the longitudinal direction and/or a longitudinal axis is not indicated in Figs. 1 and 2. The longitudinal direction and the longitudinal axis are shown in Fig. 5.

The first engagement elements 30 or the second engagement elements 32 may be configured as or may include loops and the other of the first engagement elements 30 and the second engagement elements 32 may be configured as or may include hooks configured to interlock with the loops.

Alternatively, the first engagement elements 30 and/or the second engagement elements 32 are configured as harpoon-like elements or mushroom-like elements configured to interlock with the other of the first engagement elements 30 and the second engagement elements 32.

The first attachment component 24, the second attachment component 26, the first engagement elements 30, and/or the second engagement elements 32 may be made of a variety of different materials. For instance, the first engagement elements 30 and/or the second engagement elements 32 may be made of plastic, preferably polyamide, fiber-reinforced plastic (e.g. including a plurality of aramid fibers), and/or metal, preferably stainless steel.

As stated above, Fig. 2 shows the insulation device 10 in an installed state on the pipe 11. Hence, as shown in Fig. 2, the attachment device 22 has been operated, i.e., closed, by engaging the first engagement elements 30 with the second engagement elements 32. In particular, the first attachment component 24 may be gripped by a user and pulled towards the second attachment component 26. The first attachment component 24 may be thereby stretched, bent, and/or elongated. The user may then bring the first engagement elements 30 into contact with the second engagement elements 32 such that the first engagement elements 30 may engage with the second engagement elements 32 to at least partially close and/or cover the gap 14, as shown in Fig. 2. The first section 16 may abut the second section 18 in the closed position, i.e., a distance between the first section 16 and the second section 18 may be substantially zero, as shown in Fig. 2 in an exemplary manner. The gap 14 may thereby be closed substantially completely, as shown in Fig. 2 in an exemplary manner. However, the gap 14 may remain partially open, i.e., a distance between the first section 16 and the second section 18 may be greater than zero, after the first engagement elements 30 are engaged with the second engagement elements 32, even if this is less preferred.

For the sake of clarity, the first engagement elements 30 and the second engagement elements 32 are not depicted in Fig. 2.

At least one portion 40 of the first attachment component 24 may be free of the first engagement elements 30. The portion 40 of the first attachment component 24 which is free of the first engagement elements 30 may extend in the longitudinal direction of the pipe 11. The portion 40 of the first attachment component 24 which is free of the second engagement elements 32 may be attached to an outer peripheral surface of the main body 12, when the insulation device 10 is mounted to the pipe 11. The first attachment component 24 may be attached to the first section 16 of the main body 12 by means of the portion 40 of the first attachment component 24 which is free of the first engagement elements 30, preferably only by means of the portion 40 of the first attachment component 24 which is free of the first engagement elements 30.

At least one portion 42 of the second attachment component 26 may be free of the second engagement elements 32. The portion 42 of the second attachment component 26 which is free of the second engagement elements 32 may extend in the longitudinal direction of the pipe 11. The portion 42 of the second attachment component 26 which is free of the second engagement elements 32 may face away from the gap 14, when the insulation device 10 is mounted to the pipe 11. The second attachment component 26 may be attached to the second section 18 of the main body 12 by means of the portion 42 of the second attachment component 26 which is free of the second engagement elements 32, preferably only by means of the portion 42 of the second attachment component 26 which is free of the second engagement elements 32.

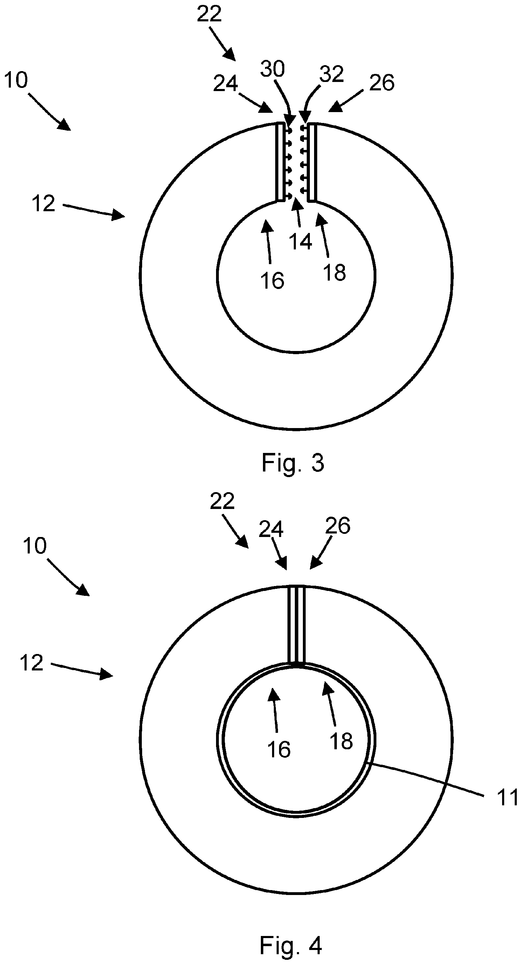

Figs. 3 and 4 show, in schematic front views, a further embodiment of the insulation device 10.

In contrast to the embodiment shown in Figs. 1 and 2, the first attachment component 24 and the second attachment component 26 of the insulation device 10 of Figs. 3 and 4 are arranged at least partially, preferably completely, within the gap 14. In other words, the first attachment component 24 may be attached to a surface of the first section 16 of the main body 12 which faces the second section 18 of the main body 12 and/or at least partially delimits the gap 14. The second attachment component 26 may be attached to a surface of the second section 18 of the main body 12 which faces the first section 16 of the main body 12 and/or at least partially delimits the gap 14. The adjacent sections 16, 18 may be pressed together, e.g., manually by a user, to engage the first engagement elements 30 with the second engagement elements 32. By contrast, in the embodiment shown in Figs. 1 and 2, the first attachment component 24 and/or the second attachment component 26 may be attached on an outer circumference and/or outer surface of the main body 12, as described above.

For the sake of clarity, the first engagement elements 30 and the second engagement elements 32 are not depicted in Fig. 4.

The embodiment of Figs. 1 and 2 may be combined with the embodiment of Figs. 3 and 4, e.g., by arranging and/or attaching one or more of the attachment device 22 on an outer circumference and/or an outer surface of the main body 12 and arranging and/or attaching one or more of the attachment device 22 at least partially within the gap 14 and/or at least partially between the main body 12 and the pipe 11.

As shown in Figs. 5 and 6, the insulation device 10 may include at least one cover layer 54 which may at least partially, preferably completely, cover a side of the attachment device 22 which faces away from the main body 12. The cover layer 54 may be non-combustible. The cover layer 54 may be configured to release one or more flame retardants, preferably upon contact with a flame and/or heat.

The cover layer 54 may be fixedly attached, preferably thermally welded and/or thermally laminated and/or by thermal activation, to at least a section of the attachment device 22 and/or the main body 12. The cover layer 54 may be fixedly attached to the attachment device 22 and/or the main body 12 without adhesives, preferably without solvent-based adhesives.

The cover layer 54 may be made of or includes one or more of the following: metal, preferably aluminum, preferably an aluminum foil, pulp, fabric, mesh, cloth, one or more natural fibers, one or more synthetic fibers, a composite material, preferably a fiber composite material which includes one or more fibers which are connected to and/or embedded in at least one matrix material, which preferably includes polyethylene terephthalate, PET, preferably also including one or more flame retardants, preferably one or more halogenated flame retardants.

As shown in Figs. 5 and 6, the attachment device 22 and the cover layer 54 may extend along the longitudinal axis LA and/or in the longitudinal direction l1 of the main body 12 and/or the pipe 11 and/or the gap 14.

The cover layer 54 may be at least partially transparent. Alternatively, the cover layer 54 may be at least partially opaque. For instance, as shown in Fig. 5, the cover layer 54 may cover and prevent the attachment device 22 from being externally visible, at least based on the perspective of Fig. 5. The attachment device 22 is visible beneath the cover layer 54 in Fig. 6, which shows a schematic front view of the insulation device 10.

As shown in Fig. 6, the cover layer 54 may be attached, preferably fixedly attached, to the first attachment component 24. Alternatively, or additionally, the cover layer 54 may be attached, preferably fixedly attached, to the second attachment component 26 and/or the main body 12, before mounting the insulation device 10 on the pipe 11 and/or after mounting the insulation device 10 on the pipe 11, i.e., before and/or after engaging the engagement elements 30 with the second engagement elements 32, when the insulation device 10 is arranged on the pipe 11.

The embodiment of Figs. 5 and 6 may be combined with the embodiment of Figs. 1 and 2 and/or with the embodiment of Figs. 3 and 4 and/or with any of the further embodiments described herein.

## Claims

1. An insulation device (10) configured to thermally insulate at least one pipe (11), including:
at least one main body (12) which is at least partially made of a thermally insulating foam material and is configured to be placed at least partially over the pipe (11) such that the main body (12) at least partially encompasses an outer circumference of the pipe (11), wherein the main body (12) has at least one gap (14) which is arranged between at least two adjacent sections of the main body (12) and which is at least partially closeable; and
at least one attachment device (22) which includes a first attachment component (24), which is attached to a first section (16) of the two adjacent sections (16, 18), and at least one second attachment component (26), which is attached to a second section (18) of the two adjacent sections (16, 18),
wherein the first attachment component (24) includes a plurality of first engagement elements (30) and the second attachment component (26) includes a plurality of second engagement elements (32) configured to releasably interlock with the first engagement elements (30) in a self-gripping manner to releasably secure the first attachment component (24) to the second attachment component (26) to at least partially close and/or cover the gap (14);
wherein the first engagement elements (30) are distributed on at least a portion of the first attachment component (24) and the second engagement elements (32) are distributed on at least a portion of the second attachment component (26), at least along a longitudinal direction of the main body (12) and/or the pipe (11), when the main body (12) is placed at least partially over the pipe (11).

2. The insulation device (10) according to claim 1, wherein the first engagement elements (30) are distributed on at least a portion of the first attachment component (24) along a circumferential direction of the pipe (11) and/or the main body (12) and the second engagement elements (32) are distributed on at least a portion of the second attachment component (26) along a circumferential direction of the pipe (11) and/or the main body (12), in a state in which the insulation device (10) and/or the main body (12) is placed at least partially over the pipe (11).

3. The insulation device (10) according to claim 1 or 2, wherein:
at least one portion (40) of the first attachment component (24) is free of the first engagement elements (30), preferably wherein the portion (40) of the first attachment component (24) which is free of the first engagement elements (30) extends in the longitudinal direction of the pipe (11), preferably wherein the portion (40) of the first attachment component (24) which is free of the second engagement elements (32) is attached to an outer peripheral surface of the main body (12), when the insulation device (10) is mounted to the pipe (11), preferably wherein the first attachment component (24) is attached to the first section (16) of the main body (12) by means of the portion (40) of the first attachment component (24) which is free of the first engagement elements (30), preferably only by means of the portion (40) of the first attachment component (24) which is free of the first engagement elements (30);
and/or
at least one portion (42) of the second attachment component (26) is free of the second engagement elements (32), preferably wherein the portion (42) of the second attachment component (26) which is free of the second engagement elements (32) extends in the longitudinal direction of the pipe (11), preferably wherein the portion (42) of the second attachment component (26) which is free of the second engagement elements (32) faces away from the gap (14), when the insulation device (10) is mounted to the pipe (11), preferably wherein the second attachment component (26) is attached to the second section (18) of the main body (12) by means of the portion (42) of the second attachment component (26) which is free of the second engagement elements (32), preferably only by means of the portion (42) of the second attachment component (26) which is free of the second engagement elements (32).

4. The insulation device (10) according to any of the preceding claims, wherein:
the first attachment component (24) includes two portions (40, 44) which are free of the first engagement elements (30), wherein the first engagement elements (30) are arranged on at least a section of the first attachment component (24) which is arranged between and/or which interconnects the two portions (40, 44) which are free of the first engagement elements (30);
and/or
the second attachment component (26) includes two portions (42, 46) which are free of the second engagement elements (32), wherein the second engagement elements (32) are arranged on at least a section of the second attachment component (26) which is arranged between and/or which interconnects the two portions (42, 46) which are free of the second engagement elements (32).

5. The insulation device (10) according to any of the preceding claims, wherein:
the first attachment component (24) is attached to a surface of the first section (16) of the main body (12) which faces the second section (18) of the main body (12) and/or at least partially delimits the gap (14);
and/or
the second attachment component (26) is attached to a surface of the second section (18) of the main body (12) which faces the first section (16) of the main body (12) and/or at least partially delimits the gap (14).

6. The insulation device (10) according to any of the preceding claims, wherein the first engagement elements (30) or the second engagement elements (32) are configured as loops and the other of the first engagement elements (30) and the second engagement elements (32) are configured as hooks configured to interlock with the loops.

7. The insulation device (10) according to any of the preceding claims, wherein the first engagement elements (30) and/or the second engagement elements (32) are configured as harpoon-like elements or mushroom-like elements configured to interlock with the other of the first engagement elements (30) and the second engagement elements (32).

8. The insulation device (10) according to any of the preceding claims, wherein:
the first attachment component (24) is bonded, preferably welded, preferably thermally welded, to the first section (16) of the main body (12);
and/or
the second attachment component (26) is bonded, preferably welded, preferably thermally welded, to the second section (18) of the main body (12).

9. The insulation device (10) according to any of the preceding claims, wherein:
at least some of the first engagement elements (30) are made of plastic, preferably polyamide, and/or at least some of the first engagement elements (30) are made of metal, preferably stainless steel, and/or at least some of the first engagement elements (30) are made of a fiber-reinforced plastic, preferably including a plurality of aramid fibers;
and/or
at least some of the second engagement elements (32) are made of plastic, preferably polyamide, and/or at least some of the second engagement elements (32) are made of metal, preferably stainless steel, and/or at least some of the second engagement elements (32) are made of a fiber-reinforced plastic, preferably including a plurality of aramid fibers.

10. The insulation device (10) according to any of the preceding claims, wherein:
the first attachment component (24) and/or the main body (12) is/are configured to allow the first attachment component (24) to be thermally welded to the first section (16) of the main body (12) by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C; more preferably no more than 85° C;
and/or
the second attachment component (26) and/or the main body (12) is/are configured to allow the second attachment component (26) to be thermally welded to the second section (18) of the main body (12) by applying heat at a temperature of no more than 240° C, preferably no more than 230° C, more preferably no more than 220° C, more preferably no more than 210° C, more preferably no more than 200° C, more preferably no more than 190° C, more preferably no more than 180° C, more preferably no more than 170° C, more preferably no more than 160° C, more preferably no more than 150° C, more preferably no more than 140° C, preferably no more than 130° C, more preferably no more than 120° C, more preferably no more than 110° C, more preferably no more than 100° C, more preferably no more than 90 ° C; more preferably no more than 85° C.

11. The insulation device (10) according to any of the preceding claims, wherein the thermally insulating foam material includes one or more polyolefin plastomers, POP, and/or one or more polyolefin elastomers, PEP.

12. The insulation device (10) according to any of the preceding claims, further including at least one cover layer (54) which at least partially, preferably completely, covers or is configured to at least partially, preferably completely, cover a side of the attachment device (22) which faces away from the main body (12), preferably wherein the cover layer (54) is non-combustible, optionally wherein the cover layer (54) is configured to release one or more flame retardants, preferably upon contact with a flame and/or heat, optionally wherein the cover layer (54) is, or is configured to be, fixedly attached, preferably thermally welded and/or without adhesives and/or by thermal activation, to at least a section of the attachment device (22).

13. The insulation device (10) according to claim 12, wherein the cover layer (54) is made of or includes one or more of the following: metal, preferably aluminum, preferably an aluminum foil, pulp, fabric, mesh, cloth, one or more natural fibers, one or more synthetic fibers, a composite material, preferably a fiber composite material which includes one or more fibers which are connected to and/or embedded in at least one matrix material, which preferably includes polyethylene terephthalate, PET, preferably also including one or more flame retardants, preferably one or more halogenated flame retardants.

14. A method of thermally insulating at least one pipe (11) by at least one insulation device (10), preferably by at least one insulation device (10) according to any of the preceding claims, including:
placing a main body (12) of the insulation device (10) at least partially over the pipe (11) such that the main body (12) at least partially encompasses an outer circumference of the pipe (11), wherein the main body (12) is at least partially made of a thermally insulating foam material, and wherein the main body (12) has at least one gap (14) which is arranged between at least two adjacent sections (16, 18) of the main body (12) and which is at least partially closeable;
engaging a plurality of first engagement elements (30) of a first attachment component (24), which is attached to a first section (16) of the two adjacent sections (16, 18), with a plurality of second engagement elements (32) of a second attachment component (26), which is attached to a second section (18) of the two adjacent sections (16, 18), to allow the second engagement elements (32) to releasably interlock with the first engagement elements (30) in a self-gripping manner to releasably secure the first attachment component (24) to the second attachment component (26) to at least partially close and/or cover the gap (14), wherein the first engagement elements (30) are distributed on at least a portion of the first attachment component (24) and the second engagement elements (32) are distributed on at least a portion of the second attachment component (26), at least along a longitudinal direction of the main body (12) and/or the pipe (11), when the main body (12) is placed at least partially over the pipe (11).

15. A method of manufacturing an insulation device (10) configured to thermally insulate at least one pipe (11), preferably the insulation device (10) according to any of claims 1 to 13, including:
providing at least one main body (12) which is at least partially made of a thermally insulating foam material and is configured to be placed at least partially over the pipe (11) such that the main body (12) at least partially encompasses an outer circumference of the pipe (11), wherein the main body (12) has at least one gap (14) which is arranged between at least two adjacent sections (16, 18) of the main body (12) and which is at least partially closeable; and
providing at least one attachment device (22) which includes a first attachment component (24) and at least one second attachment component (26), wherein the first attachment component (24) includes a plurality of first engagement elements (30) and the second attachment component (26) includes a plurality of second engagement elements (32) configured to releasably interlock with the first engagement elements (30) in a self-gripping manner to releasably secure the first attachment component (24) to the second attachment component (26) to at least partially close and/or cover the gap (14), wherein the first engagement elements (30) are distributed on at least a portion of the first attachment component (24) and the second engagement elements (32) are distributed on at least a portion of the second attachment component (26), at least along a longitudinal direction of the main body (12) and/or the pipe (11), when the main body (12) is placed at least partially over the pipe (11).
attaching the first attachment component (24) to a first section (16) of the two adjacent sections (16, 18) and the second attachment component (26) to a second section (18) of the two adjacent sections (16, 18).
